# EUROPEAN PATENT SPECIFICATION

(11) **EP 1 497 628 B1**
(45) Date of publication and mention of the grant of the patent: **14.09.2011**
(21) Application number: 02749995.3
(22) Date of filing: 15.07.2002
(51) Int. Cl.: G01K 7/02

(54) **THERMOCOUPLE PROTECTION TUBE**
SCHUTZRÖHRE FÜR EIN THERMOELEMENT
TUBE DE PROTECTION THERMOCOUPLE

(30) Priority: 15.07.2001 CN 01244854
(43) Date of publication of application: 19.01.2005
(73) Proprietor: GE Energy (USA), LLC, Atlanta, GA 30339 (US)
(72) Inventor: WU, Chi-Ming, Diamond Bar, CA 91765 (US); DONG, Hong-Hai, Jiangsu Province PRC (CN)
(74) Representative: Nash, David Allan
(86) International application number: PCT/US2002/022212
(87) International publication number: WO 2003/008920

(56) References cited:
- US-A- 5 775 807
- US-A- 5 805 651
- US-B1- 6 522 708

## Description

A gasification reactor generally comprises a reaction zone, made up of a vertical cylindrically shaped steel pressure vessel lined with refractory, and a quench chamber, such as shown in U.S. Pat. No. 2,809,104, which is incorporated herein by reference. A feed injector, such as shown in U.S. Pat. No. 2,928,460, which is incorporated herein by reference, may be used to introduce the feed streams into the reaction zone. In the reaction zone of a gasifier, the contents will commonly reach temperatures in the range of about 1,700° F (927° C) to 3,000° F (1649° C), and more typically in the range of about 2,000° F (1093° C) to 2,800° F (1538°C). Pressure will typically be in the range of about 1 atmospheres (101 kPa) to about 250 atmospheres (25331 kPa), and more typically in the range of about 15 atmospheres (1520 kPa) to about 150 atmospheres (15,199 kPa), and even more typically in the range of about 60 atmospheres (6080 kPa) to about 80 atmospheres (8106 kPa). See US Patent 3,945,942 describing a partial oxidation feed injector assembly. See US Patent 5,656,044 describing a method and an apparatus for the gasification of organic materials. See also US Patents 5,435,940, 4,851,013, and 4,159,238 describing a few of the many gasification processes known in the prior art. The entire disclosures of the above referenced patents are hereby incorporated by reference and relied upon.

It is well known in the prior art that the length of a reactor thermocouple has a fixed length inside reactor during operation of the reactor. However, the substances generated in the reactor may flow under conditions of high temperature, and thus cause the erosion and abrasion of the hot surface of the reactor lining. Such erosion and abrasion often results in the reduction of the thickness of the lining. A further result of the erosion and abrasion is that it generates considerable uncertainty of the supposed thermocouple length within the thermocouple protection tube. If the thermocouple in the thermocouple protection tube is too long, the thermocouple may be exposed to direct abrasion and damaged in a short period of time and thus be unable to measure reactor temperature. On the other hand if the thermocouple is not long enough, the thermocouple won't be able to measure reactor temperature correctly which in turn may result in an operationally difficult reactor. While the above difficulties and deficiencies have been known in the art for many years, there remains an unmet need for a resolution to resolve the problem that the length of thermocouple in thermocouple nozzle can not be adjusted during operation.

### SUMMARY OF THE INVENTION

The present invention is generally directed to a thermocouple protection tube, especially one for use in a chemical reactor and preferably a gasification reactor that permits the user to adjust the length of the thermocouple within the reactor. As generally disclosed herein, the thermocouple protection tube includes an outer casing, an inner casing and a means for fixing the relative position of the inner and outer casing.

Thus, in accordance with a first aspect, the present invention is directed to a thermocouple protection tube comprising:
an outer casing, wherein the outer casing has an inner surface and an outer surface, and the outer casing includes a first thread on the inner surface of the outer casing;
an inner casing, wherein the inner casing has an inner surface and an outer surface, and the inner casing includes a second thread on the outer surface of the inner casing such that the first thread and the second thread are threadably cooperative with each other and thereby permit the adjustment of the relative position of the inner casing inside of the outer casing and wherein the inner casing is sized so as to be positioned inside the outer casing; and
means for fixing the relative position of the inner casing within the outer casing, wherein said means for fixing includes:
   (i) a locking nut, wherein the locking nut includes a threading to match the second thread on the outer surface of inner casing so that the locking nut can move freely along second thread of the outer surface of the inner casing, and
      wherein the locking nut is threadably engaged and adjustable relative to the inner casing such that when the locking nut is frictionally engaged to the outer casing, the relative position of the outer casing and inner casing are fixed and when the locking nut is fictionally disengaged from the outer casing, the relative position of the outer casing and inner casing is adjustable; or
   (ii) a third thread on the outer surface of the outer casing includes one or more locking gaps, wherein the locking gaps are at least partially coextensive with the third thread;
      a compression nut whose thread is made to match the third thread on the surface of outer casing and
      wherein inner casing is inserted into the outer casing from the end with gaps on it and the compression nut is threadably and adjustably fastened to the outer casing the relative position of the outer casing and inner casing are fixed and when the compression nut is not fastened to the outer casing, the inner casing can be moved relative to the outer casing; or
   (iii) one or more locking screw hole in the outer casing and a locking screw insertable in said locking screw hole,
      wherein the inner casing is inserted into the outer casing from the end with locking screw hole and the locking screw is inserted into the locking screw hole, the locking screw frictionally engages the outer surface of the inner casing so as to fix the relative position of the outer casing and inner casing and when the locking screw is frictional disengaged from the outer surface the inner casing, the inner casing can be moved relative in the outer casing.
In accordance with a second aspect, the present invention is directed to a reactor comprising:
   a reactor shell that defines a reaction zone,
   a thermocouple positioned relative to the reaction zone so as to permit the determination of the temperature of the reaction zone and
   a thermocouple protection tube according to the first aspect of the invention.

In one specific and illustrative embodiment, a first thread is made on the inner surface of the outer casing. A second thread, that matches the first thread on the inner surface of the outer casing, is made on the outer surface of the inner casing. This arrangement permits the inner casing to be moved back and forward, relative to in the outer casing, through mechanical interactions of the first thread on the inner surface of the outer casing and the second thread on the outer surface of the inner casing. The means for fixing the relative position of the inner and outer casings includes a locking nut, whose thread is made to match the second thread on the outer surface of inner casing. Thus the locking nut can move freely along the inner casing. During operation as a means for fixing the relative position of the inner casing and outer casing, the locking nut is fictionally engaged to the outer casing so as to fix the relative position of the outer casing and inner casings. When adjustment is desired, the locking nut is loosened away from the outer casing so that the inner casing can be adjusted inside outer casing. This arrangement permits the thermocouple, which is fixed to the inner casing, to be adjustable. That is to say, the relative position of thermocouple to the reactor can be adjusted by adjusting the relative position of outer casing and inner casing. However, just as important, the relative position of the thermocouple to the reactor can be fixed for prolonged periods of time by fixing the relative position of the outer casing and inner casing by fictionally engaging the locking nut with the outer casing. So the adjustment of thermocouple length inside thermocouple nozzle is achieved through the stretching out and drawing back of inner casing and fixing up by the nut.

Another and illustrative alternative embodiment of the present invention includes a means for fixing the relative position of the inner casing and outer casing that utilizes a compression type arraignment. In such an illustrative embodiment, the outer casing includes at least one locking gap or groove and the outer surface of the outer casing has a third thread on its outer surface. A compression nut, whose thread is made to match the third thread on the surface of outer casing so that it can move freely along the outer casing, is used as the fixing device. During assembly, the inner casing is inserted into the outer casing from the end with gaps on it so as to form a compression type fitting. The compression nut is then fictionally fastened to the outer casing by way of the third thread. This in turn slightly compresses the locking gap so as to fix the relative position of the outer casing and inner casing. When adjustment is required, the compression nut is either loosened or completely removed away from the outer casing so that the inner casing can be moved freely inside the outer casing.

Yet another illustrative embodiment of the present invention includes a means for fixing the relative positions of the inner casing and the outer casing that includes the use of one or more locking pins or screws. In one such illustrative embodiment, there is at least one locking screw hole in the outer casing into which a locking screw is threaded. As previously disclosed above, the inner casing is inserted into the outer casing and the relative position can be adjusted. When a fixed position is desired, a locking screw is inserted into the locking screw hole and thus become fictionally engaged with the outer surface of the inner casing. This fixes the relative position of the outer casing and inner casing. When adjustment of the relative positions of the inner casing and outer casing is desired, the locking screw is disengaged from the outer surface of the inner casing and again the inner casing can be moved relative to the outer casing.

One of skill in the art should appreciate and understand that it can be concluded from the above mentioned specific structures that the present invention enables free adjustment of the thermocouple length within the thermocouple protection tube. This is in contrast with the length of prior art thermocouple protection tubes in which the relative position / length of the thermocouple is fixed after assembly. It should be appreciated by such a skilled person that a fixed length thermocouple is troublesome in use and thus results in higher operational expenses. In contrast, the present invention enables convenient adjustment and usage of the thermocouple and thus may result in reduced operational expenses.

These and other features of the present invention are more fully set forth in the following description of preferred or illustrative embodiments of the invention.

### BRIEF DESCRIPTION OF THE DRAWINGS

The description is presented with reference to the accompanying drawings in which:
Fig. 1 is the schematic diagram of an outer casing that is threaded on its inner surface.
Fig. 2 is the schematic diagram of the inner casing threaded on its outer surface for use with the outer casing shown in Fig. 1.
Fig. 3 is the schematic diagram of the conjunction of the outer casing and inner casing shown in Fig. 1 and 2.
Fig. 4 is the schematic diagram of the outer casing including a locking gap.
Fig. 5 is the schematic diagram of the inner casing for use with the outer casing shown in Fig. 4.
Fig. 6 is the schematic diagram of the conjunction of the outer casing and inner casing shown in Fig. 3 and 4.
Fig. 7 is the schematic diagram of the outer casing including locking screw holes.
Fig. 8 is the schematic diagram of the inner casing for use with the outer casing shown in Fig. 7.
Fig. 9 is the schematic diagram of the conjunction of the outer casing and inner casing shown in Fig. 7 and 8.

### DESCRIPTION OF ILLUSTRATIVE EMBODIMENTS

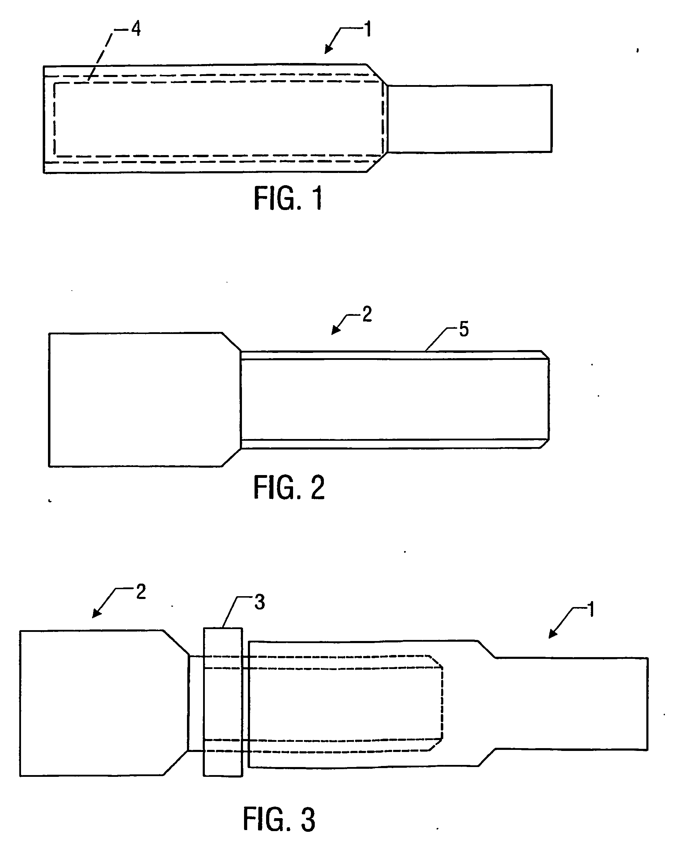

Turning now to the figures, as illustrated in Figures 1, 2 and 3, an illustrative embodiment of the thermocouple protection tube of the present invention includes an outer protection casing (1), inner protection casing (2) and means for fixing the relative position of the outer casing and the inner casing (3). As illustrated in Fig. 3, a thread locking arrangement, utilizing a locking nut serves as the means for the relative position of the outer casing and the inner casing. A first thread (4) is present on the inner surface of the outer casing (1). A second thread (5) is made on the outer surface of the inner casing (2). The first thread (4) and the second thread (5) match each other and thus through threadable and adjustable contact, the first thread (4) and second thread (5) allow for the adjustment of the relative position of the inner casing (2) within the outer casing (1). The thread of the locking nut is made to match second thread (5) of the inner casing so that it can move freely along inner casing (2). During operation the locking nut is threadably and adjustably fastened to the inner casing. When the relative position of the outer casing and the inner casing is to be fixed, the locking nut is adjusted so as to come into frictional contact with the outer casing as shown in Figure 3. In such instance the interaction of the locking nut, the inner casing and the outer casing results in a what is commonly referred to as a "thread lock" or thread locking arrangement. One of skill in the art should appreciate that when adjustment is required, the locking nut is frictionally disengaged from the outer casing and this permits the adjustment of the relative position of the inner casing inside outer casing (1). Because the thermocouple is fixed in the inner casing (2) the thermocouples relative position is adjusted with that of the inner casing (2). Hence the length and position of thermocouple inside the thermocouple protection tube is adjustable. That is to say, the position of thermocouple inside thermocouple protection tube will be determined by fixing the relative position of inner casing (2) to the outer casing (1) with the nut. One of skill in the art should appreciate that the present invention will enable adjusting the position of thermocouple inside reactor and that such adjustment can be made according to the change in thickness of reactor refractory lining previously disclosed.

The present illustrative embodiment of the present invention is used to fix and adjust the relative position of the thermocouple to the reaction zone of a chemical reactor. Such a chemical reactor may preferably be a partial oxidation / gasification reactor as described above. In such an application, the thermocouple is fixed in its position in the inner casing. The inner casing is then inserted into the outer casing and locked into position. The entire thermocouple protection tube assembly is then inserted into the wall of the reactor and positioned so as to be able to measure the temperature in the reaction zone or other portion of the reactor. The inner casing may then be adjusted so that the thermocouple will reach the desired relative position within the reactor. Such relative position may depend upon several factors including the nature and conditions of the chemical reaction being carried out, the reactor lining thickness, as well as other factors that should be known to one of skill in the art. When in the desired relative position, the locking nut is frictionally engaged to the outer casing and the relative positions of the inner casing and thermocouple to the outer casing are thus fixed. When it is necessary to re-adjust the thermocouple position within the reactor, the locking nut is disengaged so that the inner casing can be adjusted relative to the outer casing. Alternatively, the relative position of the inner and outer casings can be locked into position and then the entire assembly positioned in the reactor. When it is necessary to re-adjust the thermocouple position within the reactor, the entire assembly is removed from the reactor, the locking nut is disengaged from the outer casing and the inner casing is adjusted so that the length of thermocouple inside the reactor according to the thickness of lining. The locking nut is then frictionally engaged to the outer casing to again fix the relative position of thermocouple and outer casing. Finally the outer casing reinserted into the reactor shell to secure the thermocouple position.

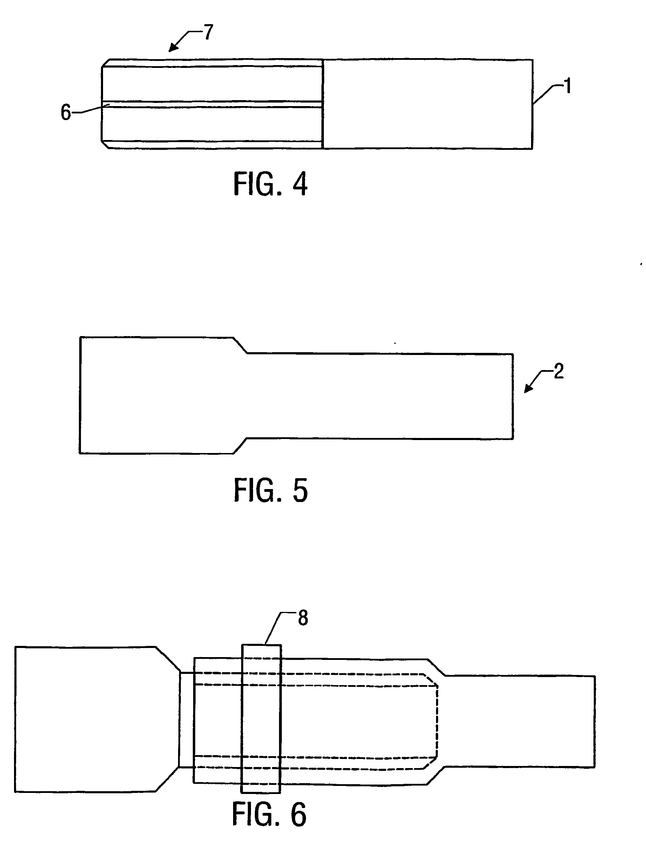

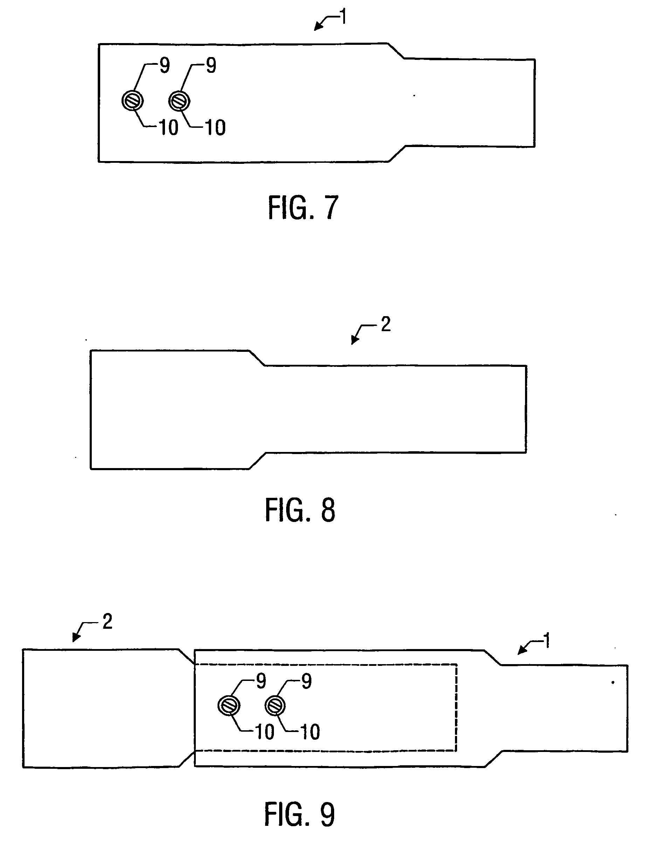

One of skill in the art should understand and appreciate that alternative means for fixing the relative positions of the outer and inner casings may be utilized. One such alternative is show in Figures 4, 5 and 6 which is illustrative of a compression fitting type means. As shown in Figure 4, the outer casing has a third thread on it outer surface. Also included is one or more compression gaps (6) which extend to the contacting end of the outer casing. A compression nut (8), whose thread is made to match the third thread (7) on the surface of outer casing (1) so that it can move freely along the outer casing is also utilized. Generally, the inner casing (2) is inserted into the outer casing (1) from the end having the third thread and the compression gaps in it as shown in Figure 7. The compression nut is then threadedly and adjustably fastened to the outer casing. As a result of the compression nut, the compression gaps slightly close and the outer casing comes into friction contact with the inner casing so as to fix the relative position of the outer casing and inner casing. When adjustment is required, the compression nut is loosened away from the outer casing (1) so that the inner casing (2) can be moved freely inside the outer casing (1).

Another alternative and illustrative embodiment of the means for fixing the relative position of the outer casing and the inner casing is shown in Figures 7, 8 and 9. As illustrated in figure 7, one or more one locking screw holes 9 exist in the outer casing 1. A corresponding locking screw 10 is threadably inserted into the corresponding locking screw hole. The inner casing 2 is inserted into the outer casing 1 from the end with the locking screw holes as shown in Figure 9. In order to fix the relative position of the outer casing and the inner casing, the locking screw is inserted into the screw hole and is positioned so that it comes into frictional contact with the outer side of the inner casing. (not shown) As a result of the frictional contact between the locking screw and the inner casing, the relative position of the outer casing 1 and inner casing becomes fixed. When adjustment of the relative position of the outer casing and the inner casing is desired, the locking screw is frictionally disengaged from outer surface of the inner casing and thus the inner casing can be adjusted relative to the outer casing.

Though only three illustrative structures of the present invention are disclosed in detail above, one of ordinary skill in the art should appreciate and understand that there are many methods in practical use to realize the embodied goals of: 1) free movement of the inner casing relative to the outer casing, and 2) the ability to fix the relative position of the outer casing and inner casing. All such embodiments are considered to be within the scope of the present invention.

With regard to the materials from which the present invention may be constructed, one of skill in the art should appreciate and understand that the selection of such suitable materials will depend upon the specific conditions and application of the invention. Suitable and illustrative materials include metals, metal alloys, ceramics, composite structures of ceramic and metal or glass fiber and the like. While such selection may be important to a specific application depending upon the reaction conditions, such as temperature, pressure, and other considerations, the material selection is tangential to the concepts embodied by the present invention.

In view of the above disclosure, one of ordinary skill in the art should understand and appreciate that one illustrative embodiment of the present invention includes a thermocouple protection tube composed of an outer casing, an inner casing sized so as to be positioned inside the outer casing, and means for fixing the relative position of the inner casing within the outer casing. Both the outer casing and the inner casing have inner and outer surfaces that may be optionally threaded. In one such illustrative embodiment, the outer casing includes a first thread on the inner surface of the outer casing, and the inner casing includes a second thread on the outer surface of the inner casing. The first thread and the second thread are threadably cooperative with each other so as to permit the adjustment of the relative position of the inner casing inside of the outer casing.

It is contemplated that there exist several different means for fixing the relative position of the inner casing within the outer casing. One such illustrative alternative means includes a locking nut which is threaded to match the second thread on the outer surface of inner casing. This allows the locking nut to move freely along second thread of the outer surface of the inner casing. When the locking nut is threadably engaged and adjustable relative to the inner casing the locking nut is adjustable such that the locking nut becomes frictionally engaged with the outer casing. Thus the relative position of the outer casing and inner casing are fixed by the thread locking action of the locking nut. One of skill in the art should appreciate that when the locking nut is fictionally disengaged from the outer casing, the relative position of the outer casing and inner casing can be adjusted.

Another alternative and illustrative means for fixing the relative position of the inner casing within the outer casing includes a compression type fitting arrangement. In such an illustrative embodiment the outer surface of the outer casing includes a third thread section. The outer casing also include one or more locking gaps, which are at least partially coextensive with the third thread. A compression nut whose thread is made to match the third thread on the surface of outer casing is designed such that when the inner casing is inserted into the outer casing from the end with gaps on it and the compression nut is threadably and adjustably fastened to the outer casing, the relative position of the outer casing and inner casing are fixed. One of skill in the art should appreciate that when the compression nut is not fastened to the outer casing, the inner casing can be moved relative to the outer casing.

Yet another alternative and illustrative embodiment of the means for fixing the relative position of the inner casing within the outer casing includes the use of locking screws. In one such illustrative embodiment one or more locking screw holes exist in the outer casing and are designed so that a locking screw is insertable into the locking screw hole. Thus when the inner casing is inserted into the outer casing from the end with locking screw holes, the locking screw is inserted into the locking screw hole. The locking screw is then rotated so as to frictionally engage the outer surface of the inner casing. This results in the fixing of the relative position of the outer casing and inner casing. One of ordinary skill in the art should understand and appreciate that when the locking screw is frictional disengaged from the outer surface, the inner casing can be moved relative in the outer casing.

The present invention also includes a reactor that incorporates the use of the thermocouple protection tube substantially described above. One of ordinary skill in the art should understand and appreciate that such an invention includes a reactor shell that defines a reaction zone, a thermocouple positioned relative to the reaction zone so as to permit the determination of the temperature of the reaction zone and a thermocouple protection tube as described above. In one such illustrative embodiment, the thermocouple protection tube includes: an outer casing, in which the outer casing has an inner surface and an outer surface, the outer casing includes a first thread on the inner surface of the outer casing; an inner casing, in which the inner casing has an inner surface and an outer surface, and means for fixing the relative position of the inner casing within the outer casing.

The inner casing is sized so as to be positioned inside the outer casing, and further the inner casing includes a second thread on the outer surface of the inner casing such that the first thread and the second thread are threadably cooperative with each other and thereby permit the adjustment of the relative position of the inner casing inside of the outer casing. Such an arrangement allows for the secure and precise adjustment of the position of the thermocouple relative to the reaction zone. The means for fixing the relative position of the outer and inner casing have been previously described in detail above.

While the apparatus and methods of this invention have been described in terms of preferred or illustrative embodiments, it will be apparent to those of skill in the art that variations may be applied to the process described herein without departing from the scope of the invention. All such similar substitutes and modifications apparent to those skilled in the art are deemed to be within the scope of the invention as it is set out in the following claims.

## Claims

1. A thermocouple protection tube comprising:
an outer casing (1), wherein the outer casing (1) has an inner surface and an outer surface, and the outer casing (1) includes a first thread (4) on the inner surface of the outer casing (1);
an inner casing (2), wherein the inner casing (2) has an inner surface and an outer surface, and the inner casing includes a second thread (5) on the outer surface of the inner casing (2) such that the first thread (4) and the second thread (5) are threadably cooperative with each other and thereby permit the adjustment of the relative position of the inner casing (2) inside of the outer casing (1) and wherein the inner casing (2) is sized so as to be positioned inside the outer casing (1); and
means (3) for fixing the relative position of the inner casing (2) within the outer casing (1), wherein said means (3) for fixing includes:
(i) a locking nut, wherein the locking nut includes a threading to match the second thread (5) on the outer surface of inner casing (2) so that the locking nut can move freely along second thread (5) of the outer surface of the inner casing (2), and
wherein the locking nut is threadably engaged and adjustable relative to the inner casing (2) such that when the locking nut is frictionally engaged to the outer casing (1), the relative position of the outer casing (1) and inner casing (2) are fixed and when the locking nut is fictionally disengaged from the outer casing (1), the relative position of the outer casing (1) and inner casing (2) is adjustable; or
(ii) a third thread (7) on the outer surface of the outer casing (1) includes one or more locking gaps (6), wherein the locking gaps (6) are at least partially coextensive with the third thread (7);
a compression nut (8) whose thread is made to match the third thread (7) on the surface of outer casing (1) and
wherein inner casing (2) is inserted into the outer casing (1) from the end with gaps on it and the compression nut (8) is threadably and adjustably fastened to the outer casing (1) the relative position of the outer casing (1) and inner casing (2) are fixed and when the compression nut (8) is not fastened to the outer casing (1), the inner casing (2) can be moved relative to the outer casing (1); or
(iii) one or more locking screw hole in the outer casing (1) and a locking screw (10) insertable in said locking screw hole,
wherein the inner casing (2) is inserted into the outer casing (1) from the end with locking screw hole and the locking screw (10) is inserted into the locking screw hole, the locking screw (10) frictionally engages the outer surface of the inner casing (1) so as to fix the relative position of the outer casing (1) and inner casing (2) and when the locking screw (10) is frictional disengaged from the outer surface the inner casing (2), the inner casing (2) can be moved relative in the outer casing (1).

2. A reactor comprising:
a reactor shell that defines a reaction zone,
a thermocouple positioned relative to the reaction zone so as to permit the determination of the temperature of the reaction zone and
a thermocouple protection tube according to claim 1.

## Patentansprüche

1. Schutzröhre für ein Thermoelement, umfassend
ein Außengehäuse (1), wobei das Außengehäuse (1) eine Innenfläche und eine Außenfläche hat, und das Außengehäuse (1) über ein erstes Gewinde (4) an der Innenfläche des Außengehäuses (1) verfügt;
ein Innengehäuse (2), wobei das Innengehäuse (2) eine Innenfläche und eine Außenfläche hat, und das Innengehäuse über ein zweites Gewinde (5) an der Außenfläche des Innengehäuses (2) verfügt, so dass das erste Gewinde (4) und das zweite Gewinde (5) formschlüssig ineinander verschraubbar sind und so die Anpassung der relativen Position des Innengehäuses (2) innerhalb des Außengehäuses (1) ermöglichen und wobei das Innengehäuse (2) so dimensioniert ist, dass es im Außengehäuse (2) angeordnet werden kann; und
Feststellmittel (3) der relativen Position des Innengehäuses (2) innerhalb des Außengehäuses (1), wobei das Feststellmittel (3) enthält:
(i) eine Feststellmutter, wobei die Feststellmutter ein Gewinde hat, das zum zweiten Gewinde (5) an der Außenfläche des Innengehäuses (2) passt, so dass die Feststellmutter sich frei entlang dem zweiten Gewinde (5) der Außenfläche des Innengehäuses (2) bewegen kann, und
wobei die Feststellmutter schraubbar eingerückt ist und gegenüber dem Innengehäuse (2) anpassbar, so dass, ist die Feststellmutter reibschlüssig mit dem Außengehäuse (1), die relative Position des Außengehäuses (1) zum Innengehäuse (2) festgestellt ist und, ist die Feststellmutter nicht reibschlüssig mit dem Außengehäuse (1), die relative Position des Außengehäuses (1) zum Innengehäuse (2) anpassbar ist; oder
(ii) ein drittes Gewinde (7) an der Außenfläche des Außengehäuses (1) verfügt über eine oder mehrere Feststellfugen (6), wobei die Feststellfugen (6) mindestens teilweise mit dem dritten Gewinde (7) übereinstimmen;
eine Druckmutter (8), deren Gewinde ausgelegt ist zum Einpassen in das dritte Gewinde (7) an der Oberfläche des Außengehäuses (1) und
wobei das Innengehäuse (2) in das Außengehäuse (1) vom Ende mit den Fugen her eingeführt wird und, ist die Druckmutter (8) schraubbar und anpassbar am Außengehäuse befestigt (1), die relative Position des Außengehäuses (1) zum Innengehäuse (2) ist festgestellt ist und, ist die Druckmutter (8) nicht am Außengehäuse befestigt (1), das Innengehäuse (2) gegenüber dem Außengehäuse (1) beweglich ist; oder
(iii) ein oder mehrere Feststellschraubenlöcher im Außengehäuse (1) und eine Feststellschraube (10), die in das Feststellschraubenloch eingeführt werden kann,
wobei das Innengehäuse (2) in das Außengehäuse (1) vom Ende mit dem Feststellschraubenloch her eingeführt wird und die Feststellschraube (10) in das Feststellschraubenloch eingeführt wird, die Feststellschraube (10) reibschlüssig mit der Außenflächen des Innengehäuses (1) ist, so dass die relative Position des Außengehäuses (1) und des Innengehäuses (2) festgestellt ist, und, ist die Feststellschraube (10) nicht reibschlüssig mit der Außenfläche des Innengehäuses (2), das Innengehäuse (2) gegenüber dem Außengehäuse (1) bewegt werden kann.

2. Reaktor, umfassend
eine Reaktorhülle, die eine Reaktionszone definiert,
ein Thermoelement, das gegenüber der Reaktionszone so positioniert ist, dass es die Erfassung der Temperatur in der Reaktionszone erlaubt, und
eine Schutzröhre für ein Thermoelement gemäß Anspruch 1.

## Revendications

1. Tube de protection de thermocouple comprenant :
un carter externe (1), dans lequel le carter externe (1) possède une surface interne et une surface externe, et le carter externe (1) inclut un premier filet (4) sur la surface interne du carter externe (1) ;
un carter interne (2), dans lequel le carter interne (2) possède une surface interne et une surface externe, et le carter interne inclut un deuxième filet (5) sur la surface externe du carter interne (2) de sorte que le premier filet (4) et le deuxième filet (5) coopèrent l'un avec l'autre de manière à pouvoir être taraudés et permettent de ce fait l'ajustement de la position relative du carter interne (2) à l'intérieur du carter externe (1) et dans lequel le carter interne (2) est dimensionné de manière à être positionné à l'intérieur du carter externe (1) ; et
un moyen (3) pour fixer la position relative du carter interne (2) au sein du carter externe (1), dans lequel ledit moyen (3) de fixation inclut :
(i) un écrou de verrouillage, dans lequel l'écrou de verrouillage inclut un filetage pour correspondre au deuxième filet (5) sur la surface externe du carter interne (2) de sorte que l'écrou de verrouillage peut se déplacer librement le long du deuxième filet (5) de la surface externe du carter interne (2), et
dans lequel l'écrou de verrouillage est engagé de manière à pouvoir être taraudé et ajustable par rapport au carter interne (2) de sorte que, lorsque l'écrou de verrouillage est engagé à friction sur le carter externe (1), la position relative du carter externe (1) et du carter interne (2) est fixée et, lorsque l'écrou de verrouillage est désengagé à friction du carter externe (1), la position relative du carter externe (1) et du carter interne (2) est ajustable ; ou
(ii) un troisième filet (7) sur la surface externe du carter externe (1) inclut un ou plusieurs espaces de verrouillage (6), dans lequel les espaces de verrouillage (6) sont au moins partiellement coextensifs avec le troisième filet (7) ;
un écrou de compression (8) dont le filet est réalisé pour correspondre au troisième filet (7) sur la surface du carter externe (1) et
dans lequel le carter interne (2) est inséré dans le carter externe (1) depuis l'extrémité avec des espaces sur elle et l'écrou de compression (8) est fixé de manière à pouvoir être taraudé et ajusté sur le carter externe (1), la position relative du carter externe (1) et du carter interne (2) est fixée et, lorsque l'écrou de compression (8) n'est pas fixé sur le carter externe (1), le carter interne (2) peut être déplacé par rapport au carter externe (1) ; ou
(iii) un trou de vis de verrouillage dans le carter externe (1) et une vis de verrouillage (10) pouvant être insérée dans ledit trou de vis de verrouillage,
dans lequel le carter interne (2) est inséré dans le carter externe (1) depuis l'extrémité avec le trou de vis de verrouillage et la vis de verrouillage (10) est insérée dans le trou de vis de verrouillage, la vis de verrouillage (10) s'engage à friction avec la surface externe du carter interne (2) de manière à fixer la position relative du carter externe (1) et du carter interne (2) et, lorsque la vis de verrouillage (10) est désengagée à friction de la surface externe du carter interne (2), le carter interne (2) peut être déplacé par rapport au carter externe (1).

2. Réacteur comprenant :
une coque de réacteur qui définit une zone de réaction,
un thermocouple positionné par rapport à la zone de réaction de manière à permettre la détermination de la température de la zone de réaction et
un tube de protection de thermocouple selon la revendication 1.
